# EUROPÄISCHE PATENTSCHRIFT

(11) **EP 0 707 549 B1**
(45) Veröffentlichungstag und Bekanntmachung des Hinweises auf die Patenterteilung: **03.12.1997**
(21) Anmeldenummer: 94914329.1
(22) Anmeldetag: 04.05.1994
(51) Int. Cl.: B62D 55/30

(54) **VORRICHTUNG ZUM SPANNEN UND ABFEDERN DES LEITRADES VON KETTENFAHRZEUGEN**
TENSIONING AND SHOCK-ABSORPTION DEVICE FOR THE IDLER WHEEL OF A TRACKED VEHICLE
DISPOSITIF POUR LA TENSION ET LA SUSPENSION DE LA ROUE DIRECTRICE DE VEHICULES CHENILLES

(30) Priorität: 16.07.1993 DE 4323912; 11.09.1993 DE 4330833
(43) Veröffentlichungstag der Anmeldung: 24.04.1996
(73) Patentinhaber: INTERTRACTOR AKTIENGESELLSCHAFT, D-58285 Gevelsberg (DE)
(72) Erfinder: KLAUS, Helmut, D-58135 Hagen (DE)
(74) Vertreter: Patentanwälte Dipl.-Ing. Conrad Köchling Dipl.-Ing. Conrad-Joachim Köchling
(86) Internationale Anmeldenummer: DE9400524
(87) Internationale Veröffentlichungsnummer: WO9502533

(56) Entgegenhaltungen:
- EP-A- 0 052 310
- DE-A- 2 557 981
- DE-U- 9 011 884
- US-A- 4 088 377

## Beschreibung

Die Erfindung betrifft eine Vorrichtung zum Spannen und Abfedern des Leitrades von Kettenfahrzeugen, gemäß Anspruch 1.

Eine derartige Vorrichtung ist aus der EP 0 052 310 A1 bekannt. Bei der bekannten Vorrichtung ist es erforderlich, ein Widerlager für die hydraulische Spanneinheit durch einen Querrahmen zu schaffen, der mit dem Fahrzeugrahmen fest verbunden ist. Dies bedeutet einen erheblichen konstruktiven Aufwand, wobei zudem die Baulänge der Gesamteinheit hierdurch vergrößert wird.

Aus dem DE-GM 90 11 884 ist eine Spannvorrichtung für das Leitrad von Kettenfahrzeugen bekannt, die aus einem hydraulischen Stellglied und einer Federspanneinheit mit vorgespannten Schraubenfedern besteht, wobei die Spannvorrichtung zwischen Gestellteilen des Leitrades und rahmenseitigen Gestellteilen eingespannt ist.

Das hydraulische Stellglied ist dabei ein Hydraulikzylinder, an dessen Kolben ein Stößel angeordnet ist, der zu Gestellteilen des Leitrades vorragt und an dieser anlegbar ist. An dem Leitrad abgewandten Ende des Zylinders ist eine Einspeisevorrichtung zum Befüllen oder Entleeren der das hydraulische Mittel aufnehmenden Kammer des Zylinders ausgebildet. An dem Leitrad zugewandten Ende des Hydraulikzylinders ist an der Zylinderaußenwandung eine Anschlagplatte befestigt, während am dem Leitrad abgewandten Ende des Hydraulikzylinders eine weitere Anschlagplatte auf der Zylinderaußenwandung bis zu einem Endanschlag verschieblich gehaltert ist. Zwischen den Anschlagplatten ist die Schraubenfeder eingespannt.
In der Einbausollage stützt sich die verschiebliche Anschlagplatte mit ihrer der Schraubenfeder abgewandten Seite an den rahmenseitigen Gestellteilen ab, wobei diese Gestellteile einen Freiraum zum Einfedern des Hydraulikzylinders bilden. Dabei ist die Schraubenfeder koaxial zum Hydraulikzylinder angeordnet und von diesem mit geringem Spiel durchgriffen. Die entsprechende Kammer des Hydraulikzylinders ist mit Fett gefüllt.

Die verschiebliche Anschlagplatte ist dabei durch eine Schraubenmutter gebildet, die auf das mit Außengewinde versehene Ende des Hydraulikzylinders aufgeschraubt ist, wobei die Gewindezone des Hydraulikzylinders dem Mehrfachen der Höhe der Schraubenmutter entspricht. Hierdurch kann die Vorspannung der Schraubenfeder geändert werden. Die Anschlagplatten weisen noch radial abragende Führungsplatten auf, die in rahmengestellseitigen Führungsstegen in Längsrichtung der Spannvorrichtung verschiebbar und radial unverdrehbar eingreifen.

Bei einer solchen Vorrichtung wird eine kurze Baulänge erreicht, wobei es zudem möglich ist, evtl. anfallende Reparaturen einer defekten Spannvorrichtung auf der Baustelle selbst vorzunehmen, indem das hydraulische Mittel aus der entsprechenden Kammer des Hydraulikzylinders abgezogen wird, so daß dann die Spannvorrichtung aus dem Maschinenrahmen ausbaubar ist. Durch Anordnung der Spannvorrichtung in einer entsprechenden Hilfsvorrichtung, beispielsweise einer U-förmigen Halterung, kann dann eine Entlastung der Spannvorrichtung erfolgen, so daß die Einzelteile einstellbar oder auch demontierbar sind.

Obwohl sich eine derartige Vorrichtung bisher im Betrieb bewährt hat, wird ein Nachteil darin gesehen, daß eine solche Vorrichtung nur mit vorgespannter Schraubenfeder eingebaut und auch gelagert und geliefert werden kann, da das Vorspannen der Schraubenfeder in einer besonderen Vorrichtung erfolgen muß. Hierdurch kann es zu Unfällen durch die erheblich vorgespannte Schraubenfeder kommen, wenn diese aufgrund unsachgemäßer Behandlung der Vorrichtung sich plötzlich entspannen kann. Eine solche Schraubenfeder ist beispielsweise mit 160 bis 190 kN vorgespannt.

Ausgehend von dem eingangs bezeichneten Stand der Technik liegt der Erfindung die Aufgabe zugrunde, eine Vorrichtung der im Oberbegriff des Anspruches 1 genannten Art zu schaffen, die bei kurzer Bauform die Lagerung, den Transport und den Einbau der Vorrichtung bei ungespannter Federeinheit ermöglicht und bei der die Federeinheit erst nach dem Einbau der Vorrichtung vorspannbar ist.

Zur Lösung dieser Aufgabe wird vorgeschlagen, daß die Vorrichtung mit ungespannter Federeinheit in den Einbauraum zwischen den Gestellteilen des Leitrades und Gestellteilen des Fahrzeugrahmens einsetzbar ist, daß die hydraulische Spanneinheit sich mit ihrem Stößel oder ihrem Zylinder an Gestellteilen des Leitrades, welches sich an der Kette des Fahrzeuges abstützt, während der Vorspannung und während des normalen Betriebes unmittelbar abstützt.

Durch die erfindungsgemäße Ausbildung ist es möglich, die Vorrichtung zunächst in ungespanntem Zustand zu fertigen, zu transportieren und zu lagern und auch an dem entsprechenden Fahrzeug anzuordnen. Bei solchen Fahrzeugen handelt es sich beispielsweis um die Unterwagen von Kranen, Rammen, Baggern, Grabenziehgeräten oder dergleichen. Die im Montagezustand ungespannte Vorrichtung wird zum Zwecke der Montage in den entsprechenden Einbauraum zwischen Gestellteile des Leitrades und des Fahrzeugrahmens eingebracht.

Die Federeinheit stützt sich dabei mit der dem Leitrad abgewandten ersten Spannplatte an Teilen des Fahrgestellrahmens ab. Durch Befüllen der Kammer des Hydraulikzylinders, beispielsweise mit Fett, wird der Kolben mit dem Stößel verschoben, wobei sich die hydraulische Spanneinheit zwischen Gestellteilen des Leitrades und Teilen der Federspanneinheit abstützt. Beim Ausfahren des Stößels wird zunächst das Leitrad gegen die Kette des Fahrzeuges gepreßt, wobei die Kette dann ein Widerlager bildet. Beim weiteren Ausfahren des Stößels der Hydraulikspanneinheit ist ein Weiter bewegen des Leitrades durch die umgebende Kette unterbunden, so daß als Reaktion eine Krafteinleitung auf die Federeinheit erfolgt, wodurch die Federeinheit vorgespannt wird. Nach Einstellen einer ausreichenden Vorspannung der Feder kann in geeigneter Weise eine Blockade der Federeinheit in der Weise erfolgen, daß eine Rückbewegung der Federeinheit im Sinne des Entspannens unterbunden ist. Die Federspanneinheit ist in dieser Weise vorgespannt und die gesamte Vorrichtung funktionstüchtig. Zum Zwecke des Ausbaus der gesamten Vorrichtung wird die hydraulische Spanneinheit so weit beaufschlagt, daß der Stößel die Federeinheit so weit vorspannt, daß die Verriegelung der Federeinheit entnommen werden kann. Danach wird die Kammer des Hydraulikzylinders entleert, so daß der Stößel sich zurückbewegt und die Federeinheit sich entspannen kann. Bei vollständig entspannter Feder und weitestgehend oder vollständig entleerter Kammer des Hydraulikzylinders kann dann die komplette Vorrichtung spannungsfrei ausgebaut werden und repariert oder ersetzt werden.

Eine besonders bevorzugte Weiterbildung wird darin gesehen, daß der Zylinder der hydraulischen Spanneinheit an Gestellteilen des Laufrades fixiert ist und einen Kolben mit zur Federeinheit abragendem Stößel aufweist, wobei an der dem Leitrad zugewandten Seite des Zylinders eine Einspeisevorrichtung zum Befüllen oder Entleeren der das hydraulische Mittel aufnehmenden Kammer ausgebildet ist, daß die aus den beiden Spannplatten und einer Schraubendruckfeder bestehende Federeinheit koaxial zum Stößel angeordnet ist und sich mit der dem Stößel abgewandten ersten Spannplatte an Gestellteilen des Fahrzeugrahmens abstützt und/oder daran befestigt ist, während die zweite Spannplatte unmittelbar oder auch mittelbar an der Stößelstirnseite abstützbar ist, und daß eine von der zweiten Spannplatte beim Vorspannen der Federeinheit überlaufbare Rücklaufsperre lösbar an Gestellteilen des Fahrzeuges befestigt ist.

Eine bevorzugte Alternative wird darin gesehen, daß die hydraulische Spanneinheit konzentrisch von der Federeinheit umgeben ist, wobei die zweite Spannplatte am leitradseitigen Ende des Zylinders der Spanneinheit fixiert ist, die erste Spannplatte vom Zylinder mit Bewegungsspiel durchgriffen ist und sich an Gestellteilen des Fahrzeugrahmens abstützt oder daran befestigt ist, am Kolben des Zylinders ein Stößel zu Gestellteilen des Leitrades vorschiebbar und daran abstützbar ist, wobei auf der dem Stößel abgewandten Seite des Kolbens eine Vorrichtung zum Befüllen und Entleeren des Zylinders mit hydraulischem Medium ausgebildet ist, und daß eine von der zweiten Spannplatte beim Vorspannen der Federeinheit gegen die am Leitrad anliegende Kette überlaufbare Rücklaufsperre lösbar an Gestellteilen des Rahmens befestigt ist.

Die Erfindung betrifft ferner eine Vorrichtung zum Spannen und Abfedern des Leitrades von Kettenfahrzeugen, nach Anspruch 1.

Zur Lösung der eingangs bezeichneten Aufgabe wird vorgeschlagen, daß der Zylinder der hydraulischen Spanneinheit an dem Gestellteil des Leitrades befestigt ist und das Gestellteil lösbar am weiteren Leitradgestell befestigbar ist, daß auf dem Zylinder eine Hülse mit Boden und mündungsseitigem Kragen insbesondere abgedichtet geführt ist und der im Zylinder abgedichtet geführte Stößel sich mit seiner Stirnfläche am Boden der Hülse abstützt, wobei die Zuführung des hydraulischen Mittels in eine Kammer am Boden (Gestellteil) des Zylinders vorgesehen ist,
daß die zweite Spannplatte eine auf die Hülse aufgeschobene Ringscheibe ist, die sich am Kragen abstützt,
daß die erste Spannplatte durch eine koaxial zur Hülse gerichtete Scheibe gebildet ist und die Schraubendruckfeder der Federeinheit sich an den Spannplatten abstützt,
und daß die erste Spannplatte an Gestellteilen des Fahrgestellrahmens befestigt ist.

Durch die erfindungsgemäße Ausbildung ist es möglich, die Vorrichtung zunächst im ungespannten Zustand zu fertigen, zu transportieren und zu lagern und auch an dem entsprechenden Fahrzeug anzuordnen. Bei solchen Fahrzeugen handelt es sich beispielsweise um die Unterwagen von Kranen, Rammen, Baggern, Grabenziehgeräten oder dergleichen. Die im Montagezustand ungespannte Vorrichtung wird zum Zwecke der Montage in den entsprechenden Einbauraum zwischen Gestellteile des Leitrades und des Fahrzeugrahmens eingebracht. Dazu kann zunächst die erste Spannplatte an Gestellteilen des Fahrgestellrahmens befestigt werden, wozu diese Gestellteile beispielsweise einen quer zur Werkrichtung der Federeinheit ausgerichteten Einbauschlitz aufweist, in welchen die erste Spannplatte eingeschoben werden kann. In dem Schlitz kann die erste Spannplatte beispielsweise durch eine Knagge oder dergleichen befestigt werden. Es ist auch möglich, die erste Spannplatte einstückig mit Gestellteilen des Fahrgestellrahmens auszubilden oder fest mit diesem zu verbinden, sofern grundsätzlich die Ausrüstung mit einer entsprechenden Spannvorrichtung vorgesehen sein soll.

Nachfolgend kann der Zylinder der hydraulischen Spanneinheit mit seinem entsprechenden Gestellteil an Gestellteilen des Leitradgestelles befestigt werden. Dabei ist die Kammer zur Aufnahme des hydraulischen Mittels im Zylinder entleert. Im Zylinder befindet sich der Stößel und auf dem Zylinder die Hülse samt zweiter Spannplatte und aufgesteckter Schraubenfeder. Nach der lagerichtigen Anordnung der Teile kann in die Kammer zur Aufnahme des hydraulischen Mittels das hydraulische Mittel, vorzugsweise Fett, eingespeist werden, wodurch der Stößel in den Zylinder in Richtung auf die erste Spannplatte verschoben wird. Die Verschiebung des Stößels bewirkt eine gleichzeitige Mitnahme der Hülse, die wiederum die zweite Spannplatte in Richtung auf die erste Spannplatte bewegt. Bei Beginn des Befüllens der Kammer des Hydraulikzylinders erfolgt zunächst eine Verschiebung des mit dem Leitrad verbundenen Gestellteiles, so daß das Leitrad gegen die Kette des entsprechenden Fahrzeuges gepreßt wird. Im Spannzustand bildet die Kette dann ein Widerlager. Beim weiteren Füllen der Hydraulikkammer des Hydraulikzylinders wird der Stößel samt Hülse und zweiter Spannplatte zur ersten Spannplatte hin bewegt, wodurch die Schraubendruckfeder, die sich zwischen den beiden Spannplatten abstützt, vorgespannt wird. Nach Einstellen einer ausreichenden Vorspannung der Feder kann in geeigneter Weise eine Blockade der Federeinheit in der Weise erfolgen, daß eine Rückbewegung der Federeinheit im Sinne des Entspannens unterbunden ist. Die erfolgt vorzugsweise dadurch, daß die zweite Spannplatte durch mechanische Mittel gegen Rücklauf gesperrt und verriegelt wird. Hierzu kann zwischen entsprechende Gestellteile des Fahrgestelles ein Riegelelement eingeschoben und in geeigneter Weise unverlierbar gehaltert werden, welches den Rücklauf der Spannplatte verhindert. Die Federspanneinheit ist auf diese Weise vorgespannt und die gesamte Vorrichtung funktionstüchtig.

Zum Zwecke des Ausbaues der gesamten Vorrichtung wird die hydraulische Spanneinheit soweit beaufschlagt, daß der Stößel mittelbar die gesamte Federeinheit soweit vorspannt, daß die Verriegelung der zweiten Spannplatte entnommen werden kann. Danach wird die Kammer des Hydraulikzylinders entleert, so daß der Stößel sich zurückbewegt und die Federeinheit sich entspannen kann. Bei vollständiger entspannter Feder und weitergehend oder vollständig entleerter Kammer des Hydraulikzylinders kann dann die komplette Vorrichtung spannungsfrei ausgebaut, repariert oder ersetzt werden.

Die erfindungsgemäße Lösung ermöglicht es aber auch lediglich das Hydraulikaggregat der Vorrichtung zum Zwecke der Reparatur oder Wartung auszubauen, indem die Verriegelung der Federeinheit, insbesondere die Rücklaufverriegelung der zweiten Spannplatte installiert bleibt und die Kammer des Hydraulikzylinders entleert wird, so daß der Stößel sich zurückbewegt. Durch die Rückfahrbewegung des Stößels kann auch die auf dem Zylinder befindliche Hülse zurückverschoben werden. Auf diese Weise kann die gesamte Hydraulikeinheit entnommen werden, während die Federeinheit im gespannten Zustand am Fahrzeuggestellt verbleibt.

Die erfindungsgemäße Ausbildung hat zudem den Vorteil, daß durch die gewählte Anordnung und Ausbildung die Baulänge der Vorrichtung insgesamt sehr kurz gehalten werden kann, so daß der benötigte Einbauraum nur geringfügig länger ist, als der Einbaulänge der ungespannten Feder entspricht.

Eine bevorzugte Weiterbildung wird darin gesehen, daß die erste Spannplatte auf ihrer dem Boden der Hülse zugewandten Seite einen Zentrierkragen oder dergleichen Zentrierelement für das entsprechende Ende der Schraubendruckfeder aufweist.

Ausführungsbeispiele der Erfindung sind in der Zeichnung gezeigt und im folgenden näher beschrieben.

Es zeigt:
- Figur 1: eine erfindungsgemäße Vorrichtung von oben gesehen, in entspannter und gespannter Lage;
- Figur 2: die Vorrichtung in Seitenansicht in der Spannlage;
- Figur 3: eine alternative Ausführungsform in der Ansicht gemäß Figur 1;
- Figur 4: die Vorrichtung gemäß Figur 3 in der Ansicht gemäß Figur 2;
- Figur 5: die Vorrichtung gemäß Figur 4 im Schnitt V-V gesehen.
- Figur 6: zeigt die wesentlichen Teile einer erfindungsgemäßen Vorrichtung in Seitenansicht im Mittellängsschnitt gesehen.

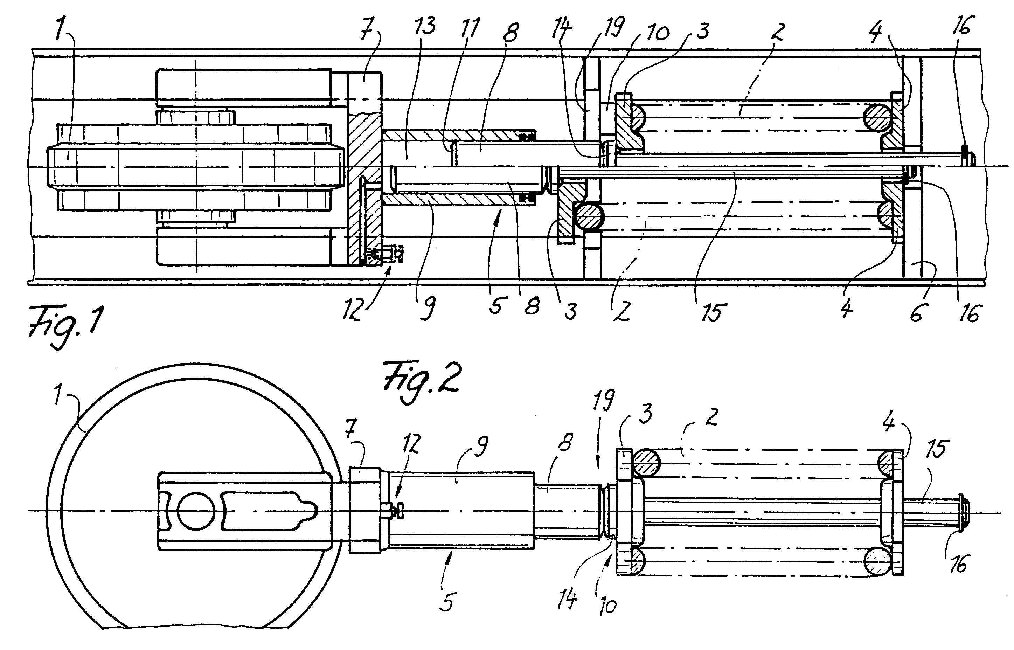

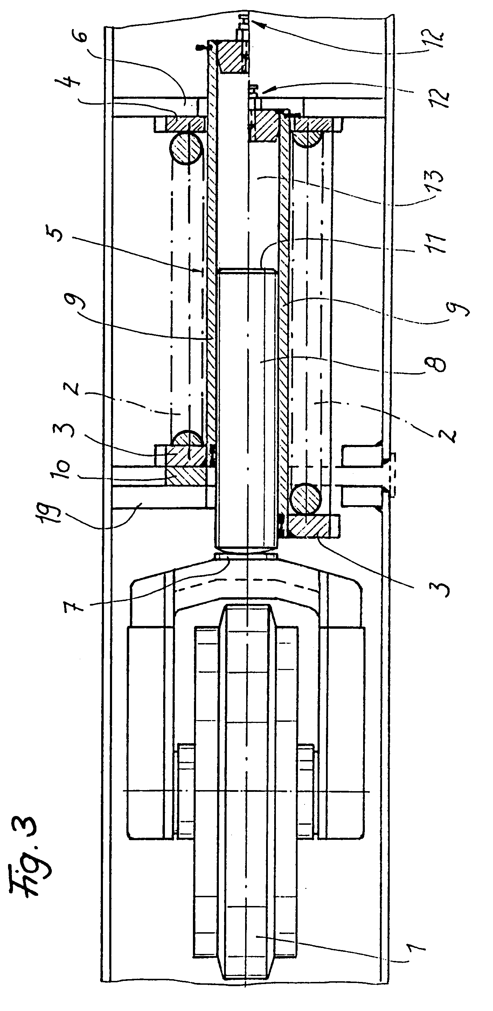

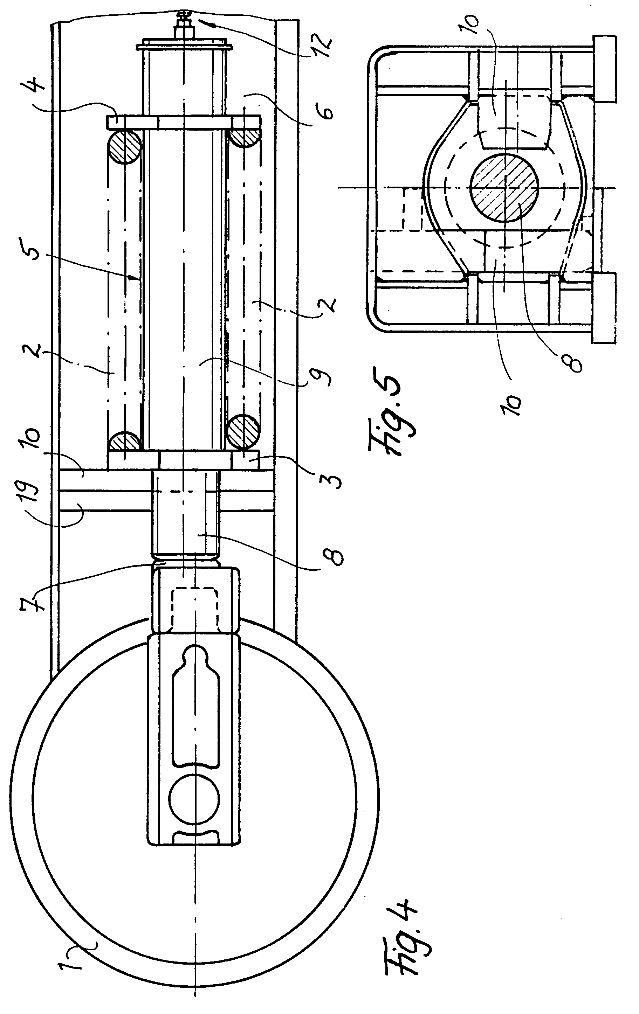

Die Vorrichtung zum Spannen und Abfedern eines Leitrades 1 von Kettenfahrzeugen besteht aus einer mechanischen Federeinheit mit Schraubenfeder 2 und Spannplatten 3,4 sowie einer hydraulischen Spanneinheit 5. Die Vorrichtung ist zwischen Gestellteilen 6 des Fahrzeugrahmens und Gestellteilen 7 des Leitrades 1 einspannbar. Die Vorrichtung wird mit ungespannter Federeinheit 2,3 zwischen den Gestellteilen 7 des Leitrades und Gestellteilen 6 des Fahrzeugrahmens eingesetzt, wie in Figur 1 untere Hälfte und Figur 3 untere Hälfte ersichtlich. Dabei stützt sich die Federeinheit 2,3,4 mit der dem Leitrad 1 abgewandten ersten Spannplatte 4 an Teilen des Fahrgestellrahmens 6 ab. Sie kann in dieser Lage fixiert sein. In dieser Position erfolgt eine Vorspannung der Federeinheit mittels hydraulischer Verschiebung der zweiten Spannplatte 3 durch die hydraulische Spanneinheit 5, die sich mit ihrem Stößel 8 oder ihrem Zylinder 9 an Gestellteilen des Leitrades 7 abstützt, welches sich wiederum an der Kette des Fahrzeuges (nicht gezeigt) abstützt. Beim Vorschieben des Stößels 8 wird die Schraubenfeder 2 durch die zweite Spannplatte vorgespannt. Nach entsprechender Verschiebung der Spannplatte 3 wird eine Position erreicht, in der eine Verriegelung des Rücklaufes der Spannplatte 2 möglich ist.

Hierzu wird zwischen Gestellteile 9 des Fahrgestells ein Riegelelement 10 eingeschoben und in geeigneter Weise unverlierbar gehaltert, welches den Rücklauf der Anschlagplatte 3 verhindert. Der Stößel 8 kann dann zurückgefahren werden, bis die Anschlagplatte an dem Riegelteil 10 und dieses wiederum am Gestellteil 9 anliegt. Die gesamte Vorrichtung ist damit betriebsbereit. Bei der Ausführungsform gemäß Figur 1 und 2 ist der Zylinder 9 der hydraulischen Spanneinheit 5 an Gestellteilen 7 des Laufrades fixiert, insbesondere angeschweißt. Die hydraulische Spanneinheit 5 weist einen Kolben 11 mit zur Federeinheit 2,3,4 abragendem Stößel 8 auf. An der dem Leitrad 1 zugewandten Seite des Zylinders 9 ist eine Einspeisevorrichtung 12 zum Befüllen oder Entleeren der das hydraulische Mittel (beispielsweise Fett) aufnehmenden Kammer 13 ausgebildet. Die aus den beiden Spannplatten 3,4 und einer Schraubendruckfeder 2 bestehende Federeinheit ist koaxial zum Stößel 8 angeordnet und stützt sich mit der dem Stößel 8 abgewandten ersten Spannplatte 4 an Gestellteilen 6 des Fahrzeugrahmens ab. Die Spannplatte 4 kann auch in eine entsprechende Tasche oder dergleichen des Gestellrahmens 6 eingeschoben sein. Die zweite Spannplatte 3 kann sich unmittelbar oder auch mittelbar über die Kopfplatte 14 eines koaxial durch die Federeinheit geführten Bolzens 15 an der Stößelstirnseite des Stößels 8 abstützen. Beim Füllen der Kammer 13 wird der Stößel vorgeschoben (in Zeichnungsfigur 1 aus der in der Zeichnung unten dargestellten Position in der Zeichnung oben dargestellten Position), wobei die Schraubendruckfeder 2 vorgespannt wird. Nach Überlaufen einer Position, in der die Aufnahme für eine Rücklaufsperre freigegeben ist, kann in diese Position eine Rücklaufsperre 10 lösbar eingesetzt werden, die sich an Gestellteilen 9 des Fahrgestells abstützt. Der Stößel 8 kann dann durch geringfügiges Entleeren der Kammer 13 zurückgefahren werden, bis die Position in Figur 1 obere Hälfte erreicht ist. In dieser Position ist die Vorrichtung betriebsbereit.

Am Ende des Bolzens 15, der dem Kopf 14 abgewandt ist, ist ein Sprengring 16 als Verliersicherung angeordnet, der bei entspannter Schraubenfeder 2 rückseitig an der Spannplatte 4 abstützbar ist, der aber keine Lasten aufnehmen muß.

Der Bolzen 15 dient lediglich dazu, eine Ausbiegung der Federspanneinheit zu verhindern und die koaxiale Anordnung der Spannplatten 3 und 4 sicherzustellen.

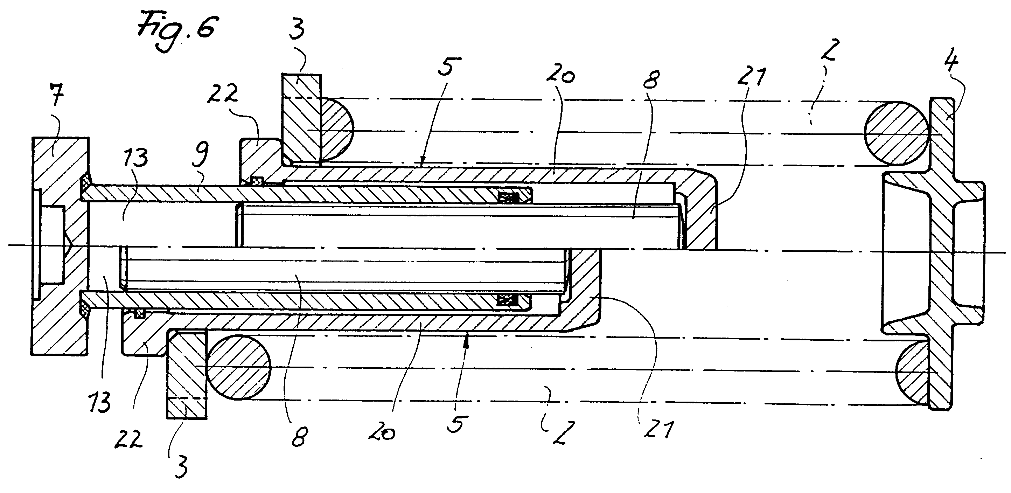

Bei der Ausführungsform gemäß Figur 3 bis 5 ist die hydraulische Spanneinheit 5 konzentrisch von der Federeinheit umgeben, wobei die zweite Spannplatte 3 am leitradseitigen Ende des Zylinders 9 fixiert, insbesondere angeschweißt ist, während die erste Spannplatte 4 vom Zylinder 9 mit Bewegungsspiel durchgriffen ist. Sie stützt sich an Gestellteilen 6 des Fahrgestells ab. Am Kolben 11 des Zylinders 9 ist ein Stößel 8 zu Gestellteilen 7 des Leitrades 1 vorschiebbar und daran abstützbar. Auf der dem Stößel 8 abgewandten Seite des Kolbens 9 ist eine Vorrichtung 12 zum Befüllen und Entleeren der Kammer 13 des Zylinders 9 ausgebildet. Die Schraubendruckfeder 2 ist koaxial von dem Zylinder 9 durchgriffen. Zum Einbau der Vorrichtung ist die Position gemäß Figur 3 untere Hälfte eingestellt. Die Vorrichtung kann so in den entsprechenden Einbauraum eingeschoben werden. Anschließend wird die Kammer 13 mit Hydraulikmittel (Fett) gefüllt, so daß der Stößel 8 in Richtung zum Leitrad 1, insbesondere zur Fläche 7 hin vorläuft. Sobald sich das Leitrad 1 an der entsprechenden Kette des Fahrzeuges abstützt, wird eine Reaktionskraft aufgebaut, die dazu führt, daß bei weiterer Füllung der Kammer 13 der Zylinder 9 aus der Position gemäß Figur 3 untere Hälfte in die Position gemäß Figur 3 obere Hälfte zurückverschoben wird. Nach Überlaufen der Rücklaufsperrposition kann ein entsprechendes Riegelelement 10 in den Spalt zwischen der Anschlagplatte 3 und dem Gestellteil 9 eingesteckt oder eingeschoben werden, so daß der Rücklauf der Platte 3 verhindert ist und somit die Schraubendruckfeder 2 vorgespannt bleibt. Durch geringfügiges Rückführen des Stößels 8 (durch teilweises Entleeren der Kammer 13) wird die Sollposition erreicht, die in Figur 3 obere Hälfte gezeigt ist. Die Vorrichtung ist damit betriebsbereit. Zur Demontage kann der Vorgang analog umgekehrt ablaufen, so daß dann die spannungsfreie Entnahme der Vorrichtung möglich ist.
In Figur 5 sind unterschiedliche Verriegelungselemente 10 gezeigt, die bei der Ausführungsform in Figur 5 links in einen oben offenen Einschubkanal einschiebbar sind und so zu einer Blockade der axialen Verschiebung der Spannplatte 3 führen, während bei der Ausführungsform gemäß Figur 5 rechts das Verriegelungselement 10 durch einen seitlichen Einschubkanal eingeschoben wird.

Durch Einsatz unterschiedlich dicker Verriegelungselemente kann eine unterschiedliche Vorspannung der Federspanneinheit erreicht werden.

Durch die Erfindung wird eine Vorrichtung zur Verfügung gestellt, die es erlaubt, die Vorrichtung in spannungslosem Zustand zu montieren und zu demontieren, wobei in einfachster Weise die Vorspannung der Federspanneinheit und die Inbetriebnahme erfolgen kann.

Bei der Ausführung gemäß Figur 6 besteht die Vorrichtung zum Spannen und Abfedern eines Leitrades von Kettenfahrzeugen aus einer mechanischen Federeinheit mit Schraubenfeder 2 und Spannplatten 3,4 sowie einer hydraulischen Spanneinheit 5. Die hydraulische Spanneinheit 5 besteht aus einer an einem Gestellteil des Leitrades befestigbaren Platte (7) die vorzugsweise eine Einspeisevorrichtung für hydraulische Mittel in die hydraulische Spanneinheit umfaßt. An dieser Platte 7 ist ein Zylinder 9 der hydraulischen Spanneinheit befestigt, beispielsweise angeschweißt. In dem Zylinder 9 ist ein Stößel 8 abgedichtet geführt, während auf der Außenfläche des Zylinders 9 eine Hülse 20 gedichtet geführt ist, die einen Boden 21 und am anderen Ende einen Kragen 22 aufweist. Diese Vorrichtung ist zwischen Gestellteilen des Fahrzeugrahmens und Gestellteilen des Leitrades einspannbar. Dazu wird die Vorrichtung mit ungespannter Federeinheit, wie dies aus der Zeichnungsfigur untere Hälfte ersichtlich ist, zwischen Gestellteile des Leitrades und Gestellteilen des Fahrzeugrahmens eingesetzt, wobei das entsprechende Gestellteil des Fahrzeugrahmens durch die an diesem befestigte erste Spannplatte 4 gebildet ist. Die Schraubenfeder 2 stützt sich dabei an der ersten Spannplatte 4 und an der zweiten Spannplatte 3 ab. Die Platte 7 ist an Gestellteilen des Leitrades befestigt. Nach ordnungsgemäßer Befestigung und Positionierung der Teile erfolgt eine Vorspannung der Federeinheit mittels hydraulischer Verschiebung der zweiten Spannplatte 3 durch die hydraulische Spanneinheit 5, die sich mit ihrem Zylinder an Gestellteilen 7 des Leitrades abstützt, welches sich wiederum an der Kette des Fahrzeuges abstützt. Bei Druckbeaufschlagung des Stößels 8 wird zunächst das Leitrad gegen die Kette vorgespannt und anschließend wird das Leitrad in dieser vorgespannten Stellung als Widerlager benutzt, so daß beim weiteren hydraulischen Ausfahren des Stößels die Hülse 20 und über den Kragen 22 die Spannplatte 3 mitgenommen wird, wodurch die Schraubenfeder 2 gegen die Spannplatte 4 vorgespannt wird. Nach entsprechender Verschiebung der Hülse 20 samt Spannplatte 3 wird eine Position erreicht, in der die Verriegelung des Rücklaufes der Spannplatte 3 möglich ist. Hierzu wird zwischen Gestellteile des Fahrgestells ein Riegelelement eingeschoben und in geeigneter Weise unverlierbar gehaltert, welches den Rücklauf der Anschlagplatte 3 verhindert. Der Stößel 8 kann dann zurückgefahren werden, bis die Anschlagplatte 3 an dem entsprechenden Riegelteil und dieses wiederum an einem entsprechenden Gestellteil anliegt. Die gesamte Vorrichtung ist damit betriebsbereit.

Durch die Erfindung wird eine Vorrichtung zur Verfügung gestellt, die es erlaubt, die Vorrichtung im spannungslosen Zustand zu montieren und zu demontieren, wobei in einfachster Weise die Vorspannung der Federeinheit und die Inbetriebnahme erfolgen kann. Dabei ist die Baulänge der Vorrichtung nur unwesentlich größer als der Länge der Schraubendruckfeder 2 im entspannten Zustand entspricht.

Die Erfindung ist nicht auf die Ausführungsbeispiele beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Kettenfahrzeug mit einer Spann- und Federungsvorrichtung für das Spannen und Abfedern des Leitrades (1) von Kettenfahrzeugen, bestehend aus einer mechanischen Federeinheit mit Schraubenfeder (2) und Spannplatten (3,4) sowie einer hydraulischen Spanneinheit (5), wobei die Vorrichtung zwischen Gestellteilen (6,7) des Leitrades (1) und des Fahrzeugrahmens einspannbar ist, die Federeinheit sich mit der dem Leitrad (1) abgewandten ersten Spannplatte (4) an Teilen des Fahrgestellrahmens (6) abstützt, die Vorspannung der Federeinheit mittels hydraulischer Verschiebung der zweiten Spannplatte (3) durch die hydraulische Spanneinheit (5) erfolgt, und die Vorspannposition durch eine Verriegelung der zweiten Spannplatte (3) gegen Rücklauf an Gestellteilen des Rahmens sicherbar ist, **dadurch gekennzeichnet,** daß die Vorrichtung mit ungespannter Federeinheit in den Einbauraum zwischen den Gestellteilen (7) des Leitrades (1) und Gestellteilen (6) des Fahrzeugrahmens einsetzbar ist, daß die hydraulische Spanneinheit (5) sich mit ihrem Stößel (8) oder ihrem Zylinder (9) an Gestellteilen (7) des Leitrades (1), welches sich an der Kette des Fahrzeuges abstützt, während der Vorspannung und während des normalen Betriebes unmittelbar abstützt.

2. Vorrichtung nach Anspruch 1**, dadurch gekennzeichnet**, daß der Zylinder (9) der hydraulischen Spanneinheit (5) an Gestellteilen (7) des Laufrades (1) fixiert ist und einen Kolben (11) mit zur Federeinheit abragendem Stößel (8) aufweist, wobei an der dem Leitrad (1) zugewandten Seite des Zylinders (9) eine Einspeisevorrichtung (12) zum Befüllen oder Entleeren der das hydraulische Mittel aufnehmenden Kammer (13) ausgebildet ist, daß die aus den beiden Spannplatten (3,4) und einer Schraubendruckfeder (2) bestehende Federeinheit koaxial zum Stößel (8) angeordnet ist und sich mit der dem Stößel (8) abgewandten ersten Spannplatte (4) an Gestellteilen (6) des Fahrzeugrahmens abstützt und/oder daran befestigt ist, während die zweite Spannplatte (3) unmittelbar oder auch mittelbar an der Stößelstirnseite abstützbar ist, und daß eine von der zweiten Spannplatte (3) beim Vorspannen der Federeinheit überlaufbare Rücklaufsperre (10) lösbar an Gestellteilen (9) des Fahrzeuges befestigt ist.

3. Vorrichtung nach Anspruch 1, **dadurch gekennzeichnet,** daß die hydraulische Spanneinheit (5) konzentrisch von der Federeinheit umgeben ist, wobei die zweite Spannplatte (3) am leitradseitigen Ende des Zylinders (9) der Spanneinheit (5) fixiert ist, die erste Spannplatte (4) vom Zylinder (9) mit Bewegungsspiel durchgriffen ist und sich an Gestellteilen (6) des Fahrzeugrahmens abstützt oder daran befestigt ist, am Kolben (11) des Zylinders (9) ein Stößel (8) zu Gestellteilen (7) des Leitrades (1) vorschiebbar und daran abstützbar ist, wobei auf der dem Stößel (8) abgewandten Seite des Kolbens (9) eine Vorrichtung (12) zum Befüllen und Entleeren des Zylinders (9) mit hydraulischem Medium ausgebildet ist, und daß eine von der zweiten Spannplatte (3) beim Vorspannen der Federeinheit gegen die am Leitrad (1) anliegende Kette überlaufbare Rücklaufsperre (10) lösbar an Gestellteilen (19) des Rahmens befestigt ist.

4. Vorrichtung nach Anspruch 1, **dadurch gekennzeichnet,** daß der Zylinder (9) der hydraulischen Spanneinheit (5) an dem Gestellteil (7) des Leitrades befestigt ist und das Gestellteil (7) lösbar am weiteren Leitradgestell befestigbar ist,
daß auf dem Zylinder (9) eine Hülse (20) mit Boden (21) und mündungsseitigem Kragen (22) insbesondere abgedichtet geführt ist und der im Zylinder (9) abgedichtet geführte Stößel (8) sich mit seiner Stirnfläche am Boden (21) der Hülse (20) abstützt, wobei die Zuführung des hydraulischen Mittels in eine Kammer (13) am Boden (Gestellteil 7) des Zylinders (9) vorgesehen ist,
daß die zweite Spannplatte (3) eine auf die Hülse (20) aufgeschobene Ringscheibe ist, die sich am Kragen (22) abstützt,
daß die erste Spannplatte (4) durch eine koaxial zur Hülse (20) ausgerichtete Scheibe gebildet ist und die Schraubendruckfeder (2) der Federeinheit sich an den Spannplatten (3,4) abstützt, und daß die erste Spannplatte (4) an Gestellteilen des Fahrgestellrahmens befestigt ist.

5. Vorrichtung nach Anspruch 4, **dadurch gekennzeichnet,** das die erste Spannplatte (4) auf ihrer dem Boden (21) der Hülse (20) zugewandten Seite einen Zentrierkragen oder dergleichen Zentrierelement für das entsprechende Ende der Schraubendruckfeder (2) aufweist.

## Claims

1. Track-laying vehicle having a tensioning and cushioning device for tensioning and spring-mounting the idler (1) of track-laying vehicles, comprising a mechanical spring unit having a helical spring (2) and face plates (3, 4) and also a hydraulic tensioning unit (5), wherein the device is clampable between mounting parts (6, 7) of the idler (1) and of the vehicle frame, the spring unit bears by means of the first face plate (4), remote from the idler (1), on parts of the vehicle frame (6), the spring unit is pretensioned by means of hydraulic displacement of the second face plate (3) by the hydraulic tensioning unit (5), and the pretensioned position is securable by locking the second face plate (3) against mounting parts of the frame to prevent return, characterized in that the device is insertable with untensioned spring unit into the installation space between the mounting parts (7) of the idler (1) and mounting parts (6) of the vehicle frame and in that, during the pretensioning and during normal operation, the hydraulic tensioning unit (5) bears by means of its ram (8) or its cylinder (9) directly on mounting parts (7) of the idler (1) which bears on the track of the vehicle.

2. Device according to Claim 1, characterized in that the cylinder (9) of the hydraulic tensioning unit (5) is fixed on mounting parts (7) of the idler (1) and has a piston (11) having a ram (8) projecting towards the spring unit, an injection device (12) for filling or draining the chamber (13) receiving the hydraulic medium being formed at that side of the cylinder (9) which is adjacent to the idler (1), in that the spring unit comprising the two face plates (3, 4) and a helical compression spring (2) is disposed coaxially with respect to the ram (8) and bears by means of the first face plate (4), remote from the ram (8), on mounting parts (6) of the vehicle frame and/or is attached thereto, whereas the second face plate (3) can bear directly or even indirectly on the end face of the ram, and in that a return arrester (10) which can be overrun by the second face plate (3) during the pretensioning of the spring unit is detachably attached to the mounting parts (9) of the vehicle.

3. Device according to Claim 1, characterized in that the hydraulic tensioning unit (5) is concentrically surrounded by the spring unit, the second face plate (3) being fixed to the idler-side end of the cylinder (9) of the tensioning unit (5), the first face plate (4) being penetrated by the cylinder (9) with movement clearance and bearing against mounting parts (6) of the vehicle frame or attached thereto, a ram (8) on the piston (11) of the cylinder (9) being displaceable towards mounting parts (7) of the idler (1) and being capable of being borne thereon, and a device (12) for filling the cylinder (9) with hydraulic medium and draining it being formed on that side of the piston (11) which is remote from the ram (8), and in that a return arrester (10) which can be overrun by the second face plate (3) during the pretensioning of the spring unit against the track adjacent to the idler (1) is detachably attached to mounting parts (19) of the frame.

4. Device according to Claim 1, characterized in that the cylinder (9) of the hydraulic tensioning unit (5) is attached to the mounting part (7) of the idler and the mounting part (7) can be detachably attached to the further idler mounting part,
in that a sleeve (20) having a base (21) and orifice-side collar (22) is guided, in particular in a sealed manner, on the cylinder (9), and the ram (8) guided in a sealed manner in the cylinder (9) bears by means of its end face on the base (21) of the sleeve, the supply of the hydraulic medium into a chamber (13) being provided at the base (mounting part 7) of the cylinder (9), in that the second face plate (3) is an annular disc which is pushed onto the sleeve (20) and which bears on the collar (22),
in that the first face plate (4) is formed by a disc aligned coaxially with respect to the sleeve (20) and the helical compression spring (2) of the spring unit bears on the face plates (3, 4),
and in that the first face plate (4) is attached to mounting parts of the vehicle frame.

5. Device according to Claim 4, characterized in that the first face plate (4) has a centring collar or similar centring element on its side adjacent to the base (21) of the sleeve (20) for the corresponding end of the helical compression spring (2).

## Revendications

1. Véhicule à chenille présentant un dispositif pour la tension et la suspension de la roue directrice (1) qui se compose d'une unité de ressort mécanique dotée d'un ressort de compression (2) et de plaques de serrage (3, 4), ainsi que d'une unité de réglage de la tension hydraulique (5), le dispositif pouvant être mis sous tension entre des éléments structures (6, 7) de la roue directrice (1) et du châssis du véhicule, l'unité de ressort s'appuyant avec la première plaque de serrage (4) opposée à la roue directrice (1) contre des éléments du châssis du véhicule (6), la prétension de l'unité de ressort étant réalisée par un déplacement hydraulique de la seconde plaque de serrage (3) par l'intermédiaire de l'unité de réglage de la tension hydraulique (5), et la position de prétension pouvant être sécurisée par un verrouillage, au niveau des éléments structurels (7) du châssis, contre un mouvement de retour de la deuxième plaque de serrage (3), caractérisé en ce que le dispositif peut être installé avec une unité de ressort non tendue dans l'espace de montage entre les éléments structures (7) de la roue directrice (1) et les éléments structurels (6) du châssis du véhicule, que l'unité de réglage de la tension hydraulique (5) s'appuie directement au niveau de sa tige-poussoir (8) ou de son cylindre (9) contre des éléments structurels (7) de la roue directrice (1), qui s'appuie contre la chenille du véhicule, pendant la prétension et pendant le fonctionnement normal.

2. Dispositif selon la revendication 1, caractérisé en ce que le cylindre (9) de l'unité de réglage de la tension hydraulique (5) est fixé à des éléments structures (7) de la roue directrice (1) et comporte un piston (11) doté d'une tige-poussoir (8) s'écartant de l'unité de ressort, un dispositif d'alimentation (12) étant prévu au niveau du côté du cylindre (9) orienté vers la roue directrice (1), destiné à remplir ou à purger la chambre (13) recevant le fluide hydraulique, en ce que l'unité de ressort composée des deux plaques de serrage (3, 4) et d'un ressort de compression (2) est disposée coaxialement à la tige-poussoir (8) et s'appuie et/ou est fixée au niveau de la première plaque de serrage (4) opposée à la tige-poussoir (8) contre/à des éléments structures (6) du châssis du véhicule, alors que la seconde plaque de serrage (3) peut s'appuyer directement ou indirectement au côté frontal de la tige-poussoir, et en ce qu'un arrêt anti-retour (10) pouvant être dépassé par la seconde plaque de serrage (3) lors de la mise sous prétension de l'unité de ressort est fixé de façon amovible à des éléments structurels (19) du châssis du véhicule.

3. Dispositif selon la revendication 1, caractérisé en ce que l'unité de réglage de la tension hydraulique (5) est entourée par l'unité de ressort de manière concentrique, la seconde plaque de serrage (3) étant de ce fait fixée à l'extrémité côté roue directrice du cylindre (9) de l'unité de réglage de la tension (5), la première plaque de serrage (4) étant pénétrée par le cylindre (9) avec un jeu de déplacement et s'appuyant ou étant fixée à des éléments structures (6) du châssis du véhicule, en ce qu'au niveau du piston (11) du cylindre (9), une tige-poussoir (8) peut coulisser par rapport à des éléments structures (7) de la roue directrice (1) et peut s'y appuyer, un dispositif (12) de remplissage et de purge du cylindre (9) d'un fluide hydraulique étant conçu sur le côté du cylindre (9) opposé à la tige-poussoir (8), et, lorsque l'unité de ressort est mise sous prétension contre la chenille reposant sur la roue directrice (1), en ce qu'un arrêt anti-retour (10) est fixé de façon amovible à des éléments structures (19) du châssis, dont la position peut être dépassée par la seconde plaque de serrage (3).

4. Dispositif selon la revendication 1, caractérisé en ce que le cylindre (9) de l'unité de réglage de la tension hydraulique (5) est fixé à l'élément structurel (7) de la roue directrice (1) et que l'élément structure (7) peut être fixé de façon amovible à l'autre structure de roue directrice, en ce qu'un manchon (20) avec un fond (21) et un collet (22) sur le côté de l'ouverture est logé sur le cylindre (9) de façon particulièrement hermétique, que la tige-poussoir (8) guidée dans le cylindre (9) de façon hermétique s'appuie au niveau de sa surface frontale contre le fond (21) du manchon (20), l'introduction du fluide hydraulique dans une chambre (13) étant prévue dans le fond du cylindre (9) (élément structurel 7), en ce que la seconde plaque de serrage (3) est constituée d'une rondelle annulaire emmanchée sur le manchon (20) qui s'appuie contre le collet (22), en ce que la première plaque de serrage (4) est constituée d'une rondelle orientée selon un plan coaxial par rapport au manchon (20) et que le ressort de compression (2) de l'unité de ressort s'appuie contre les plaques de serrage (3, 4), et en ce que la première plaque de serrage (4) est fixée à des éléments structurels du châssis du véhicule.

5. Dispositif selon la revendication 4, caractérisé en ce que la première plaque de serrage (4) comporte sur son côté orienté vers le fond (21) du manchon (20) un collet de centrage ou élément de centrage équivalent, destiné à l'extrémité correspondante du ressort de compression (2).
